# EUROPEAN PATENT SPECIFICATION

(11) **EP 0 933 560 B1**
(45) Date of publication and mention of the grant of the patent: **12.06.2002**
(21) Application number: 98200244.6
(22) Date of filing: 28.01.1998
(51) Int. Cl.: F16H 15/52

(54) **Speed variator for a driving shaft with mechanical transmission for machine tools or motor vehicles**
Stufenloses mechanisches Getriebe für eine Antriebswelle für Werkzeugmaschinen oder Kraftfahrzeuge
Variateur de vitesse à réglage continu pour un axe d'entraînement de machines-outils ou véhicules automobiles

(43) Date of publication of application: 04.08.1999
(73) Proprietor: Amisano, Alfredo, 20151 MILANO (IT)
(72) Inventor: Amisano, Alfredo, 20151 MILANO (IT)
(74) Representative: Arena, Giovanni

(56) References cited:
- FR-A- 667 152
- FR-A- 2 207 567
- GB-A- 1 040 064
- US-A- 4 682 517
- SOVIET INVENTIONS ILLUSTRATED Section PQ, Week 8341 23 November 1983 Derwent Publications Ltd., London, GB; Class Q64, AN 787160 XP002070002 & SU 977 878 A (ZHILIN)
- SOVIET INVENTIONS ILLUSTRATED Section PQ, Week 8620 30 May 1986 Derwent Publications Ltd., London, GB; Class Q64, AN 129840 XP002070003 & SU 1 184 998 A (BIELGOROD NUCL EQUI)

## Description

The present invention relates to a speed variator for a driving shaft with mechanical transmission for application either to machine tools or motor vehicles.

A speed variator used for a long time in machines for industrial use or on motor vehicles is made up of a pair of pulleys with trapezoid race connected by a transmission belt of rubber or steel band with the two plates of each pulley movable axially so as to be able to change the diameter of each pulley useful for slipping of the belt and consequently to change the transmission ratio between the driving shaft and the driven shaft.

This variator displays the shortcoming that it allows limited changes and does not permit starting of the driven shaft from a stop so that it makes necessary the use of an added friction coupling of mechanical or other type.

Document FR-A-2.207.567 describes a rotative speed variator according to be preamble of claim 1, of the conical pendulum type comprising a stationary base member having an axis and an internal rolling path, and a pendulum linked by a universal joint to a shaft coaxial with said base member. The pendulum has an external rolling path, the generants of said two rolling paths being complementary shaped such that a very close contact may be obtained therebetween provided said pendulum may be axially shifted only a slight distance from its still position.

Document FR-A-667.152 describes a rotative speed variator comprising a driving first shaft, a drived second shaft coaxial with the first shaft, an intermediate anular first slide with internal surface of truncated cone shape, capable of translations in the direction of its axis, which is concident with the axes of said first and second shafts. A roller of truncated cone shape is turnable upon a third shaft with axis parallel to the axis of the other two shafts, with a first end linked to the end of the second shaft by means of an articulated joint, and with a second end fastened to a second slide capable of translations in a direction perpendicular to the axis of the first shaft and carried by a support fastened to the end of the first shaft. A spring applies a force to the second slide so as to press the roller against the interior surface of the first slide.

The purpose of the present invention is to make available a variator which with respect to the above would display at least one of the following advantages and to wit:
- the presence in the variator of friction coupling devices with zones affected by the coupling having surfaces considerably larger than those along which occurs the belt to pulley coupling in belt variators with consequent capability of less specific load (pressure) of the surfaces in contact and thus less wear,
- the capability of moving the driven shaft from a stop with no need of any supplemental friction or hydraulic coupling and gradually changing its rotation up to the maximum rotation speed,
- silence of the variator thanks to the absence therein of transmission belts,
- compactness of the cylindrical housing case of the variator thanks to the coaxiality of the driving and driven shafts, and
- the capability of using the variator either as an industrial variator allowing slow and gradual starting of machine tools (for example electromechanical ones) even with high peak torque, or as a continuous-type gear box for motor vehicles designed to provide gradual speed change of the vehicle starting from a stop without the speed jerks and jumps which usually occur in geared transmissions for motor vehicles. These purposes are achieved by a speed variator as described and characterized in the claims set forth below.

The characteristics and advantages of the variator in accordance with the present invention are set forth in the description of an embodiment thereof given below by way of non-limiting example with reference to the annexed drawings.

In the drawings:
- FIG 1: shows a cross section view of the variator in accordance with the present invention along its axis,
- FIG 2: shows the variator of FIG 1 in a more diagrammatic form,
- FIG 3: shows the variator of FIG 1 in a more diagrammatic form showing the slide in intermediate position with respect to its end positions,
- FIG 4: shows a cross section view of the roller and the slide of FIG 2 perpendicular to the variator axis and along the left edge of the slide, and
- FIG 5: shows the roller and slide of FIG 3 in a cross section perpendicular to the variator axis through plane of cut A-A of the same FIG.

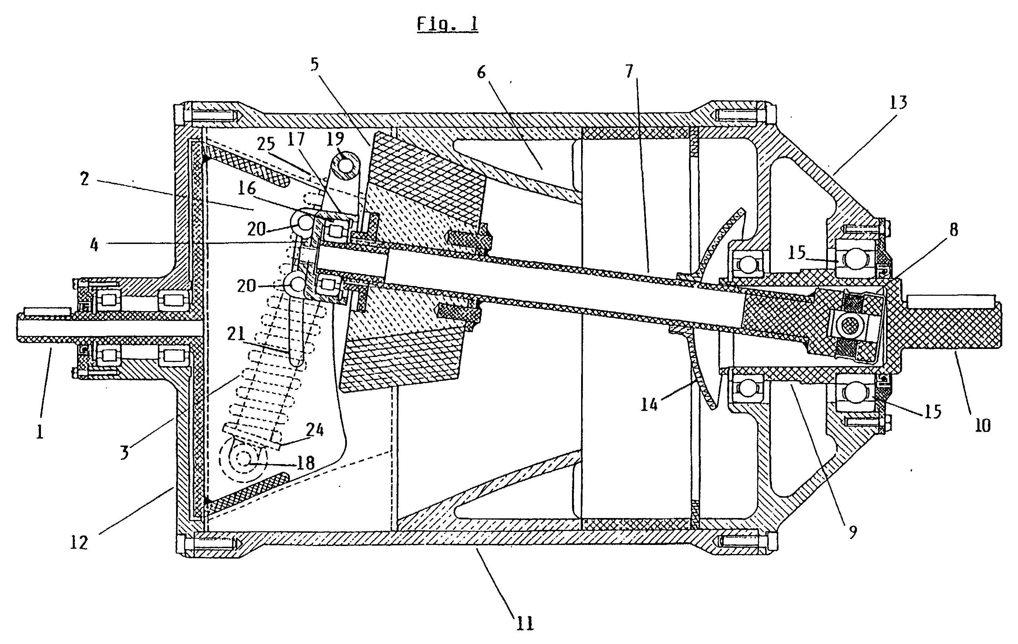

The reference numbers indicated in FIG 1 represent the following component parts.
- 1 and 10:: the driving shaft and driven shaft respectively whose common axis is called hereinafter 'variator axis',
- 11:: the variator housing case designed to remain in static position,
- 7 :: shaft for transmission of movement to the driven shaft 10 connected with one of its ends to the shaft itself through an articulated joint (universal or homokinetic) 8 and having its other end supported by bearings 16 located in a housing box 17 so as to provide a pivoted support,
- 4 :: carriage supporting the box 17,
- 2 :: entrainment structure for the carriage 4 fastened to the end of the driving shaft 1,
- 3 :: spring anchored on one side to the structure 2 and on the other to the carriage 4 and exerting on the carriage a thrust tending to thrust the carriage away from the variator axis,
- 5 :: roller of virtually truncated cone shape fastened coaxially to the shaft 7,
- 6 :: slide of annular shape capable of translation in the direction of the variator axis and displaying a wide through hole with flared shape having a surface obtainable by revolution of a generating line around the variator axis,
- 9 :: end of the driven shaft 10 with hollow cylindrical form receiving internally the joint 8,
- 12:: cover with hub for housing the bearings supporting the shaft 1,
- 13:: closing cover for the case 11 in which have seats the bearings 15 supporting the end 9 of the shaft 10,
- 14:: disk in spherical cap form for protection from possible infiltration of lubricant in the variator,
- 18 and 19:: pins fastened to the structure 2 and the carriage 4 respectively and on which are pivoted two plates 24 and 25 which withstand the thrust exerted by the ends of the spring 3, and
- 20:: pins fastened to the carriage 4 and anchored with the capability of slipping in the groove 21 of the structure 2 so as to allow pendulous movements of the carriage along the race and at the same time entrainment of the carriage by the structure 2 during the rotary movement of the latter around the axis of the pin 1.

Provided at least one of the two surfaces affected by the friction coupling (the truncated cone one of the roller 5 and the internal one of the hole of the slide 6) be appropriately covered with a material having a high friction coefficient, the operation of the variator of FIG 1 may be described as follows.

Let it be assumed that the driving shaft 1 rotates with a speed of n1 rpm entraining in its rotary movement through the structure 2 the carriage 4. This carriage will complete a circular trajectory around the variator axis while the axis of the shaft 7 will describe during its movement a conical surface.

The spring 3 exerts on the carriage 4 a thrust such as to produce in the contact zone between the roller 5 and the slide 6 a friction stress sufficient to oppose the resisting moment applied by the shaft 10 to the shaft 7 through the joint 8 and thus ensure that the roller 5 in its orbital movement around the variator axis rolls on the internal surface of the slide 6 without slipping and does so whatever the coupling position between the roller 5 and the slide 6.

Accordingly for the rotary movement of the driving shaft 1 there is a corresponding precession movement of the transmission shaft 7, i.e. a movement composed of a rotary movement around its own axis and a movement of this axis along a conical surface with vertex in the center of the joint 8.

This movement of the shaft 7 translates into a rotation of the shaft 10 in a direction opposite to the direction of rotation of the driving shaft 1.

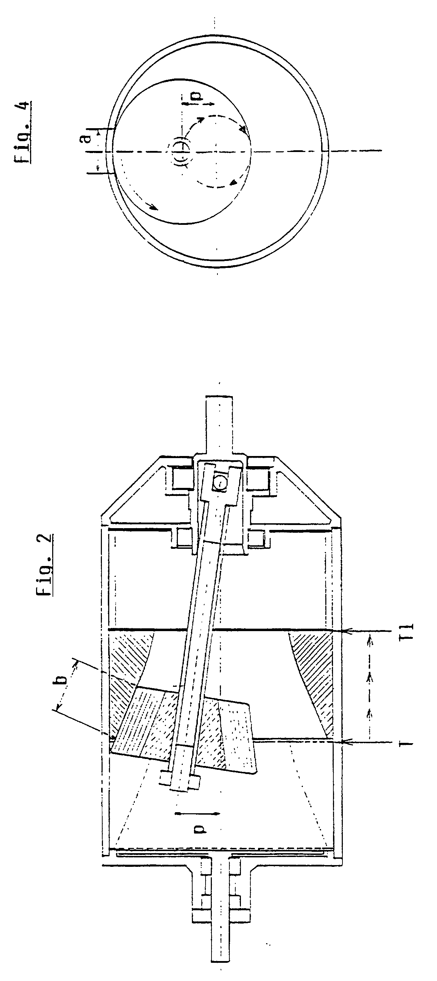

As regards the transmission ratio r = n2/n1 between the rotation speed n2 of the driven shaft 10 and the speed n1 of the driving shaft 1 produced when the slide 6 is in the position of FIG 1 (slide at its right-hand stop point) it is necessary to refer to FIG 2 which reproduces FIG 1 in a more schematic manner.

In FIG 2, b indicates the axial extension (i.e. along the generating lines of the conical surface of the roller 5) of the contact zone between the roller 5 and the slide 6 and p represents the angular shift of the axis of the shaft 7 from the variator axis and T and T1 represent the left-hand and right-hand stop positions respectively of the slide (its right-hand end).

If we consider a contact point of the roller 5 with the internal surface of the slide, for example the mean point of the line b, and if we call r1 and r2 the distances of that point from the axis of the shaft 7 and the variator axis respectively, then we can show that the transmission ratio r is given by the formula r = (r2-r1)/r1.

It appears that in order for the value of r to be constant along the line b (contact zone) and therefore slipping of the roller on the internal surface of the slide does not occur along b it is necessary that the conical surface of the roller 5 belong to a cone with vertex at the point of intersection of the shafts 7 and 10. This condition ensures that the above mentioned distances r1 and r2 vary proportionally along b and thus also ensure constancy of the ratio (r2-r1)/r1.

According to the example of FIGS 1 and 2, along b we have r2 = 1.5·r1 so that r = (1.5·r1-r1)/r1 = 1.5 - 1 = 0.5, i.e. with the slide in the position of FIGS 1 and 2 for each revolution of the driving shaft there is a corresponding half revolution of the driven shaft.

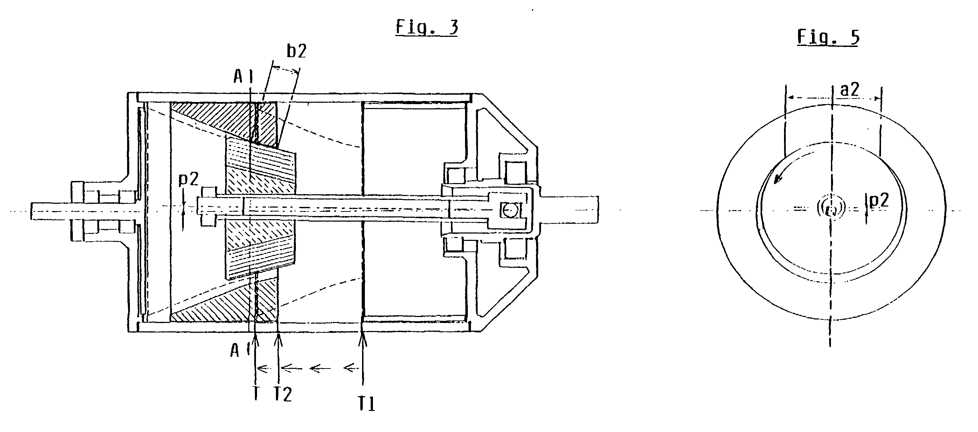

FIG 3 shows the slide 6 located in an intermediate position T2 between the left-hand stop position T and the right-hand stop position T1 and the resulting smaller angular deviation p2 which the axis of the shaft 7 displays with respect to the variator axis as compared with the analogous deviation p of FIG 2.

In the case of FIG 3 calculation of the transmission ratio is again given by the above formula in which in this case r1 and r2 are to be calculated with reference to any point in the contact zone b2.

In the particular case in which the slide 6 is in its left-hand stop position the roller 5 occupies all of the right-hand mouth of the slide 6, the shaft 7 is in the same axis as the shafts 1 and 10 and accordingly in this case since r1 = r2, r = 0. I.e. the shaft 10 remains stopped although the driving shaft 1 continues to revolve.

It is clear that in conformity with the example of FIG 1 it is possible to gradually change the transmission ratio r from 0.5 to 0 and vice versa. This can be obtained by gradually changing the position of the slide 6 from position T to position T1 and vice versa. The translation motion of the slide can be controlled through a mechanical or hydraulic device not shown in the FIGS.

To ensure that in any possible position of the slide 6 the contact zone between the roller 5 and the slide 6 extends sufficiently in the axial direction (i.e. along the generating lines of the conical surface of the roller 5) it is appropriate that the slide have an internal surface formed in such a manner that for any of its positions the roller 5 will be tangent to its surface at the point of contact.

The result is an internal surface of the slide slightly convex towards the variator axis as shown in FIGS 1 to 3.

FIG 4 shows diagrammatically a cross section view of the roller and slide of FIG 1 in a cross section perpendicular to the variator axis and taken along the left-hand edge of the slide. It shows the two movements of which the precession movement of the shaft 7 is composed, i.e. a counterclockwise rotation movement of the shaft 7 around its own axis and a clockwise swinging movement of that axis around the variator axis.

In FIG 4 there is also indicated by a the width of the zone in which due to the thrust effect exerted by the spring 3 there occurs contact between the roller and the slide.

FIG 5 shows diagrammatically a cross section view of the roller and slide of FIG 3 with a cross section passing through the line A-A of the latter FIG. It shows a width a2 of the contact zone greater than the corresponding width a of FIG 4. However if FIG 2 is compared with FIG 3 it is seen that for the position of the slide 6 as indicated in FIG 2 there is a corresponding extension b in the axial direction of the contact zone greater than the corresponding extension b2 of FIG 3 so that the surface area of the zone affected by the contact and hence of the appearance of friction forces is virtually equivalent in both cases.

If it is desired to compare the performance which a variator in accordance with the present invention allows in comparison with the performance of a prior art variator of equal space occupied of the belt and pulley type it is seen that in the variator in accordance with the present invention the zone affected by the friction coupling is considerably more extensive (from 80 to 120 times) than the zone in which the belt to pulley coupling occurs in belt variators. This allows transmission of greater torque and power on the driven shaft and smaller specific load (pressure) of the surfaces affected by the friction coupling and less wear thereof.

It is added that while in the belt-type variator the transmission ratio can vary from approximately 0.41 to 2.4 and hence with no possibility of zeroing, in the variator in accordance with the present invention this ratio can vary continuously from 0 to values near 1 without requiring the addition of friction couplings.

It is clear that numerous modifications, adaptations, variations and replacements of elements with others functionally equivalent can be made to the embodiments described above by way of nonlimiting example without thereby going beyond the protective scope of the following claims.

One variation could concern different relative sizing of the roller 5 and the slide 6 requiring for the left-hand stop position of the slide 6 a ratio r2/r1 different from 1.5 as indicated above and hence maximum transmission ratio different from r = 0.5 as calculated above.

Another variation could concern the exchange of functions between the shaft 1 and the shaft 10 because since operation of the variator is reversible the shaft 10 could assume the function of driving shaft and the shaft 1 that of driven shaft.

## Claims

1. Speed variator with mechanical transmission to be placed between a first (1) and a second (10) mutually coaxial shafts whose common axis is called hereinafter 'variator axis', comprising: - an annular slide (6) capable of translation in the direction of the variator axis and displaying a through hole with a flared form whose surface is obtainable by revolution of a generating line around the variator axis with the mouth having the greater hole diameter turned towards the first shaft (1),
- a third shaft (7) having a first end connected to the second shaft (10) through an articulated joint (8) and the second end inserted in said hole of the slide (6),
- a roller (5) fastened coaxially to said third shaft (7) (7) near its second end and in contact with the surface of the above mentioned slide hole,
**characterized by** the fact that:
- a pivoted support (17) of the second end of the third shaft (7) is designed to allow rotation of the shaft around its own axis,
- a rigid structure (2) is designed to apply to the above mentioned support a centrifugal force with respect to the variator axis,
- said rigid structure (2) is fastened to the end of the first shaft (1) and pivots together with said shaft,
- said pivoted support (17) is fastened to a carriage (4) entrained by the above mentioned rigid structure (2) and capable of oscillations around the point of intersection of the axes of the second (10) and third (7) shafts, and
- a spring (3) is anchored on one side to the above mentioned carriage (4) and on the other side to the above mentioned structure (2) and exerts on the carriage (4) a thrust tending to thrust the carriage away from the axis of the variator, so as to produce rolling without slipping of the roller (5) on the internal surface of the hole of the slide (6).

2. Variator in accordance with claim 1 **characterized in that** the articulated joint (8) is a universal or homokinetic joint.

3. Variator in accordance with claim 1 **characterized in that** at least the internal surface of the hole of the slide (6) or the surface of the roller (5) designed for contact with the slide is covered with a material having a high friction coefficient.

4. Variator in accordance with claim 1 **characterized in that** the roller (5) displays peripherally a truncated cone surface with vertex at the point of intersection of the axes of the second and third shafts.

5. Variator in accordance with claim 4 **characterized in that** the internal surface of the hole of the slide (6) is formed in such a manner that for every possible position of the slide the roller (5) is tangent to said surface at the point of contact.

## Patentansprüche

1. Drehzahlwandler mit mechanischer Übertragung zwischen einer ersten Welle (1) und einer zweiten Welle (10), die koaxial zueinander angeordnet sind und deren gemeinsame Achse nachfolgend als Wandlerachse bezeichnet wird, mit
- einem ringförmigen Schieber (6), welcher in Richtung der Wandlerachse verschiebbar ist und eine Durchgangsöffnung von sich erweiternder Form aufweist, deren Oberfläche durch Rotation einer Erzeugerlinie um die Wandlerachse erhalten werden kann, und deren Mund in Richtung zur ersten Welle (1) einen größeren Öffnungsdurchmesser hat,
- einer dritten Welle (7), die mit einem ersten Ende über ein Schwenkgelenk (8) mit der zweiten Welle (10) verbunden ist und die mit einem zweiten Ende in die Öffnung des Schiebers (6) eingesetzt ist,
- einem Rad (5), welches koaxial an der dritten Welle (7) nahe deren zweitem Ende befestigt ist und die Oberfläche der Schieberöffnung berührt,
**dadurch gekennzeichnet, daß**
- daß ein Schwenklager (17) des zweiten Endes der dritten Welle (7) so gestaltet ist, daß die Welle um ihre eigene Achse rotieren kann,
- daß eine starre Struktur (Mitnehmer 2) so gestaltet ist, daß auf das Lager (17) eine Zentrifugalkraft bezüglich der Wandlerachse ausgeübt wird,
- daß die starre Struktur (2) am Ende der ersten Welle (1) befestigt ist und zusammen mit der Welle schwenkt,
- daß das Schwenklager (17) an einem Wagen (4) befestigt ist, der durch die starre Struktur (2) mitgenommen wird und um den Schnittpunkt der Achsen der zweiten und dritten Welle (10 bzw. 7) schwingen kann,
- daß eine Feder (3) an einer Seite mit dem Wagen (4) und an der anderen Seite mit der Struktur (2) verbunden ist und auf den Wagen (4) eine Druckkraft ausübt, welche ihn von der Wandlerachse wegdrückt, derart, daß das Rad (5) schlupffrei auf der inneren Oberfläche der Öffnung des Schlitzens (6) abrollt.

2. Wandler nach Anspruch 1, **dadurch gekennzeichnet, daß** das Schwenkgelenk (8) ein Universalgelenk oder ein homokinetisches Gelenk ist.

3. Wandler nach Anspruch 1, **dadurch gekennzeichnet, daß** mindestens die innere Oberfläche der Öffnung des Schlitzens (6) oder die den Schlitten berührende Oberfläche des Rades (5) mit einem Material hohen Reibungskoeffizientens überzogen ist.

4. Wandler nach Anspruch 1, **dadurch gekennzeichnet, daß** das Rad (5) eine kegelstumpfförmige Umfangsoberfläche aufweist, deren Scheitelpunkt im Schnittpunkt der Achsen der zweiten und dritten Welle liegt.

5. Wandler nach Anspruch 4, **dadurch gekennzeichnet, daß** die innere Oberfläche der Öffnung des Schlittens (6) derart geformt ist, daß bei jeder Position des Schlittens das Rad (5) im Berührungspunkt tangential zu der Oberfläche ist.

## Revendications

1. Variateur de vitesse à transmission mécanique destiné à être disposé entre un premier (1) et un deuxième (10) arbres coaxiaux dont l'axe commun est appelé par la suite "axe du variateur" comprenant :
- un flasque annulaire (6) pouvant subir une translation dans la direction de l'axe du variateur et traversé par une ouverture ayant une forme évasée dont la surface peut être obtenue par une révolution d'une ligne génératrice autour de l'axe du variateur, l'orifice de plus grand diamètre de l'ouverture étant tourné vers le premier arbre (1) ;
- un troisième arbre (7) ayant une première extrémité reliée au deuxième arbre (10) par l'intermédiaire d'un joint articulé (8) et dont la deuxième extrémité est insérée dans l'ouverture du flasque (6) ;
- un galet (5) monté coaxialement au troisième arbre (7) à proximité de sa deuxième extrémité et en contact avec la surface de l'ouverture du flasque ;
**caractérisé en ce que** :
un support monté à pivotement (17) de la deuxième extrémité du troisième arbre (7) est conçu pour permettre la rotation dudit arbre autour de son axe ;
une structure rigide (2) est conçue pour appliquer audit support une force centrifuge par rapport à l'axe du variateur ;
la structure rigide (2) est fixée à l'extrémité du premier arbre (1) et pivote de concert avec ledit arbre ;
le support monté à pivotement (17) est fixé à un chariot (4) entraîné par la structure rigide (2) et capable d'oscillations autour du point d'intersection des axes des deuxième (10) et troisième (7) arbres ; et
un ressort (3) est fixé par une de ses extrémités au chariot (4) et par son autre extrémité à la structure (2) et exerce sur le chariot (4) une poussée tendant à éloigner le chariot de l'axe du variateur; de manière à produire un roulement sans glissement du galet (5) sur la surface interne de l'ouverture du flasque (6).

2. Variateur selon la revendication 1, dans lequel le joint articulé (8) est un joint universel ou homocinétique.

3. Variateur selon la revendication 1, dans lequel au moins la surface interne de l'ouverture du flasque (6) ou la surface du galet (5) conçue pour entrer en contact avec le flasque est recouverte d'un matériau ayant un coefficient de frottement élevé.

4. Variateur selon la revendication 1, dans lequel le galet (5) présente sur sa périphérie une surface de cône tronqué dont le sommet est le point d'intersection des axes des deuxième et troisième arbres.

5. Variateur selon la revendication 4, dans lequel la surface interne de l'ouverture du flasque (6) est formée de telle manière que pour toutes les positions possibles du flasque, le galet (5) est tangent à ladite surface au point de contact.
